# EUROPÄISCHE PATENTSCHRIFT

(11) **EP 2 117 907 B1**
(45) Veröffentlichungstag und Bekanntmachung des Hinweises auf die Patenterteilung: **12.01.2011**
(21) Anmeldenummer: 08709254.0
(22) Anmeldetag: 28.02.2008
(51) Int. Cl.: B62D 17/00

(54) **VERFAHREN ZUM EINSTELLEN ANGETRIEBENER RÄDER EINES KRAFTFAHRZEUGES**
METHOD FOR ADJUSTING DRIVEN WHEELS OF A MOTOR VEHICLE
PROCÉDÉ DE RÉGLAGE DE ROUES DE TRANSMISSION D'UN VÉHICULE AUTOMOBILE

(30) Priorität: 09.03.2007 DE 102007011459
(43) Veröffentlichungstag der Anmeldung: 18.11.2009
(73) Patentinhaber: ZF Friedrichshafen AG, 88038 Friedrichshafen (DE)
(72) Erfinder: HORSAK, Günther, 88074 Meckenbeuren (DE); KETTELER, Karl-Hermann, 88677 Markdorf (DE); WINSTEL, Thomas, 88046 Friedrichshafen (DE); WIESENTHAL, Marc, 49088 Osnabrück (DE)
(86) Internationale Anmeldenummer: PCT/EP2008/052440
(87) Internationale Veröffentlichungsnummer: WO 2008/110464

(56) Entgegenhaltungen:
- DE-A1- 10 007 658
- DE-A1- 19 850 076
- DE-A1- 19 857 394

## Beschreibung

Die Erfindung betrifft ein Verfahren zum Einstellen antriebsstrangseitiger Räder eines Kraftfahrzeugs gemäß dem Oberbegriff des Patentanspruchs 1.

Das Fahrverhalten eines Kraftfahrzeugs sowie der Reifenverschleiß wird insbesondere durch den sogenannten Sturz sowie die sogenannte Spur von Rädern des Kraftfahrzeugs bestimmt. Beim Sturz handelt es sich um die Schrägstellung einer Radebene zur Fahrbahnsenkrechten quer zur Fahrzeuglängsachse. Bei der Spur handelt es sich um die Schrägstellung der Radebene zur Fahrzeuglängsachse in Geradeausfahrt. Bei bislang bekannten Kraftfahrzeugen können Sturz und Spur derart eingestellt werden, dass Spur und Sturz werkstattseitig auf einer Achsmessbank vermessen werden, wobei auf Basis dieser Vermessung Spur und Sturz manuell eingestellt werden.

Aus der DE 198 57 394 C2 ist ein regelbares Aufhängungssystem für ein Fahrwerk eines Kraftfahrzeugs mit kraftfahrzeuginternen Aktuatoren zum gleichzeitigen und entkoppelten Lenken, Federn, Spureinstellen, Sturzeinstellen und Radstandsändern bekannt, wobei eine Regeleinheit auf Grundlage von Zustands- und Betriebsgrößen des Kraftfahrzeugs Stellsignale für die Aktuatoren erzeugt. Dies erfolgt zur Bereitstellung eines aktiven Fahrwerks dynamisch während der Fahrt, wobei eine Redundanz dadurch erreicht wird, dass mindestens zwei Aktuatoren ein Rad des Kraftfahrzeugs beaufschlagen.

Aus der gattungsgemäßen DE 100 07 658 A1 ist ebenfalls ein regelbares Aufhängungssystem für ein Fahrwerk eines Kraftfahrzeugs mit kraftfahrzeuginternen Aktuatoren zum gleichzeitigen und entkoppelten Lenken, Federn, Spureinstellen und Sturzeinstellen bekannt, wobei ein Zusatzaktuator vorgesehen ist, der im Fehlerfall einer der Aktuatoren, diesen hinsichtlich seiner Funktion vollständig ersetzt.

Aus der DE 198 50 076 A1 ist eine Kraftfahrzeuglenkung mit einer Spurstange und einer Verstelleinrichtung zum Einstellen der Fahrzeugspur bekannt, wobei die Verstelleinrichtung statisch ist, d.h. während eines Fahrbetriebs nicht verstellbar ist.

Hiervon ausgehend liegt der vorliegenden Erfindung das Problem zu Grunde, ein neuartiges Verfahren zum Einstellen antriebsstrangseitiger Räder des Kraftfahrzeugs zu schaffen.

Dieses Problem wird durch ein Verfahren gemäß Patentanspruch 1 gelöst. Demzufolge werden zum Einstellen antriebsstrangseitiger Räder eines Kraftfahrzeugs, wobei der Antriebsstrang neben den Rädern ein Antriebsaggregat und ein Getriebe umfasst, Spur und/oder Sturz der Räder durch kraftfahrzeuginterne Aktuatoren eingestellt und Messwerte von Spur und/oder Sturz durch kraftfahrzeuginterne Sensoren ermittelt. Erfindungsgemäß wird
- nach einem Kraftfahrzeugneustart, bei welchem sich das Kraftfahrzeug im Stillstand befindet und vorzugsweise gleichzeitig der Lenkwinkel in etwa Null beträgt, an den Rädern mit Hilfe der Sensoren Messwerte und damit Ist-Werte von Spur und/oder Sturz ermittelt, und
- dann, wenn hierbei eine Abweichung von einem Soll-Wert für Spur und/oder Sturz ermittelt wird, ein Fehlereintrag gespeichert, wobei bei einem Werkstattbesuch die Ansteuerung der Aktuatoren freigegeben wird, wobei
- die Einstellung von Spur und/oder Sturz über die Aktuatoren nur dann durchgeführt wird, wenn sich das Kraftfahrzeug im Stillstand befindet und vorzugsweise gleichzeitig ein Lenkwinkel in etwa Null beträgt.

Mit der hier vorliegenden Erfindung kann eine kraftfahrzeugautarke, statische Überprüfung und Korrektur von Spur und/oder Sturz an einem Kraftfahrzeug erfolgen, um z. B. irreversible Verformungen im Antriebsstrang, die durch Überlastung oder Verschleiß verursacht werden, zu kompensieren. Nur dann, wenn der Antriebsstrang einen definierten, statischen Ist-Zustand einnimmt, erfolgt im Sinne der Erfindung eine Ansteuerung von antriebsstrangseitigen Aktuatoren zur Einstellung von Spur und/oder Sturz. Ein derart definierter, statischer Ist-Zustand des Kraftfahrzeugs liegt dann vor, wenn bei oder nach einem Fahrzeugneustart das Kraftfahrzeug stillsteht und vorzugsweise ein Lenkwinkel in etwa Null beträgt. Weiterhin ist vorgesehen, dass die Ansteuerung der antriebsstrangseitigen Aktuatoren zur Einstellung von Spur und/oder Sturz nur dann freigegeben wird, wenn in einer Werkstatt eine entsprechende Funktion aktiviert und freigegeben wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein stark schematisiertes Blockschaltbild eines erfindungsgemä- ßen Kraftfahrzeugs; und
- Fig. 2: ein Signalflussdiagramm zur weiteren Verdeutlichung der Erfin- dung.

Die hier vorliegende Erfindung betrifft ein Verfahren zum Einstellen antriebsstrangseitiger Räder eines Kraftfahrzeugs, wobei ein Antriebsstrang eines Kraftfahrzeugs neben einem Antriebsaggregat und einem Getriebe weiterhin Räder umfasst.

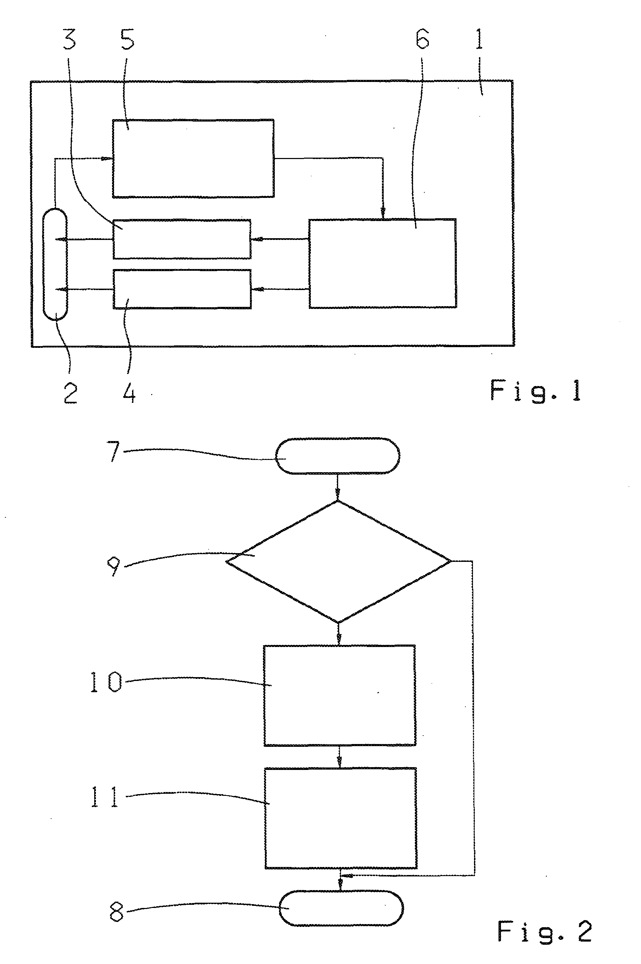

Fig. 1 zeigt eine stark schematisierte Darstellung eines Antriebsstrangs 1 eines erfindungsgemäßen Kraftfahrzeugs im Bereich eines Rads 2, wobei gemäß Fig. 1 der Antriebsstrang 1 und damit das Kraftfahrzeug mindestens einen Aktuator 3 zur Einstellung der Spur und mindestens einen Aktuator 4 zur Einstellung des Sturzes des Rads 2 umfasst. Bei den Aktuatoren 3 und 4 handelt es sich entweder um elektromotorische Aktuatoren oder um hydraulische Aktuatoren oder um pneumatische Aktuatoren. Die Aktuatoren wirken auf längsverstellbare Lenker einer Vorderachse und/oder einer Hinterachse ein, um Spur und/oder Sturz des jeweiligen Rads einzustellen.

In den Antriebsstrang 1 und damit das Kraftfahrzeug sind weiterhin Sensoren 5 integriert, um Spur und/oder Sturz des jeweiligen Rads 2 messtechnisch zu erfassen. Mit den Sensoren 5 kann die Lage einer Radebene der Räder 2 an einer Vorderachse und/oder an einer Hinterachse erfasst werden, wobei die kraftfahrzeuginternen bzw. antriebsstranginternen Sensoren 5 zur Erfassung von Spur und/oder Sturz vorzugsweise als Abstandssensoren ausgebildet sind, welche die dreidimensionale, absolute Lage der Radebene des jeweiligen Rads zwei zur jeweiligen Kraftfahrzeugachse dreidimensional im Raum erfassen.

Die vorzugsweise als Abstandssensoren ausgebildeten Sensoren 5 können die Lage der Radebene des jeweiligen Rads 2 unabhängig von einer Federbewegung des jeweiligen Rads 2 dreidimensional und absolut erfassen.

Gemäß Fig. 1 werden die von den Sensoren 5 ermittelten Messwerte über Spur und/oder Sturz in einer Regelungseinrichtung 6 verwendet, um Steuersignale für die Aktuatoren 3, 4 zur Einstellung von Spur und/oder Sturz zu erzeugen. Im Sinne der hier vorliegenden Erfindung steuert die Regelungseinrichtung 6 die Aktuatoren 3, 4 nur dann an, wenn der Antriebsstrang 1 einen definierten, statischen Ist-Zustand aufweist. Nur dann, wenn demnach definierte, statische Randbedingungen für den Antriebsstrangzustand erfüllt sind, erfolgt im Sinne der hier vorliegenden Erfindung über die Aktuatoren 3, 4 eine Einstellung von Spur und/oder Sturz am jeweiligen Rad 2 des Antriebsstrangs 1 des erfindungsgemäßen Kraftfahrzeugs.

Hieraus folgt, dass die Regelungseinrichtung 6 die Aktuatoren 3, 4 auf Grundlage der von den Sensoren 5 bereitgestellten Messwerte nur dann ansteuert, wenn der Antriebsstrang 1 einen definierten, statischen Ist-Zustand einnimmt. Ebenso ist es möglich, dass die Sensoren 5 nur dann Messwerte für die Regelungseinrichtung 6 bereitstellen, wenn der Antriebsstrang 1 den definierten, statischen Ist-Zustand einnimmt.

Vorzugsweise liegt ein solcher definierter, statischer Ist-Zustand dann vor, wenn sich das Kraftfahrzeug im Stillstand befindet und vorzugsweise gleichzeitig ein Lenkwinkel in etwa Null beträgt. So kann z. B. bei jedem Kraftfahrzeugneustart, bei welchem das Kraftfahrzeug sich im Stillstand befindet und gleichzeitig der Lenkwinkel Null beträgt, eine erfindungsgemäße Einstellung von Spur und/oder Sturz an den Rädern 2 des Antriebsstrangs 1 erfolgen.

Alternativ ist es möglich, dass bei jedem Neustart eines Kraftfahrzeugs, bei welchem sich das Kraftfahrzeug im Stillstand befindet und der Lenkwinkel Null beträgt, mit Hilfe der Sensoren 5 Messwerte für Spur und/oder Sturz zu erfassen, und dann, wenn Abweichungen von entsprechenden Sollwerten festgestellt werden, einen Fehlereintrag in der Regelungseinrichtung 6 zu speichern.

Auf Grundlage eines solchen in der Regelungseinrichtung 6 gespeicherten Fehlereintrags kann bei einem Werkstattbesuch durch z. B. Anschließen eines Wartungsgeräts an die Kraftfahrzeugelektronik des Kraftfahrzeugs in der Regelungseinrichtung 6 die Ansteuerung der fahrzeuginternen Aktuatoren 3 und 4 freigeschaltet wird, um dann ausschließlich in der Werkstatt Spur und/oder Sturz einzustellen.

Fig. 2 verdeutlicht die Erfindung anhand eines Signalflussdiagramms des erfindungsgemäßen Verfahrens zum Einstellen antriebsstrangseitiger Baugruppen eines Kraftfahrzeugs zur Beeinflussung von Spur und/oder Sturz, wobei ein Schritt 7 den Start des erfindungsgemäßen Verfahrens und ein Schritt 8 das Ende des erfindungsgemäßen Verfahrens verdeutlicht.

Nach dem Start des erfindungsgemäßen Verfahrens in Schritt 7, z. B. nach einem Neustart eines Kraftfahrzeugs, wird in einem Schritt 9 überprüft, ob ein definierter, statischer Ist-Zustand für den Antriebsstrang vorliegt, um das erfindungsgemäße Verfahren weiter auszuführen. Ist dies nicht der Fall, weist der Antriebsstrang also keinen definierten, statischen Ist-Zustand auf, so wird ausgehend von Schritt 9 auf Schritt 8 verzweigt und das Verfahren beendet.

An dieser Stelle sei nochmals darauf hingewiesen, dass es sich bei dem definierten, statischen Ist-Zustand des Antriebsstrangs, der in Schritt 9 des erfindungsgemäßen Verfahrens überprüft wird, z. B. um die Überprüfung handeln kann, ob das Kraftfahrzeug sich im Stillstand befindet und gleichzeitig ein Lenkwinkel in etwa Null beträgt. Dies kann nach jedem Neustart des Kraftfahrzeugs erfolgen.

Wird hingegen in Schritt 9 festgestellt, dass der Antriebsstrang einen definierten, statischen Ist-Zustand einnimmt, so wird ausgehend von Schritt 9 auf Schritt 10 verzweigt.

In Schritt 10 werden mit Hilfe der Sensoren 5 an den Rädern 2 Messwerte über Spur und/oder Sturz erfasst und der Regelungseinrichtung 6 bereitgestellt bzw. von der Regelungseinrichtung 6 eingelesen.

Gemäß dem sich anschließenden Schritt 11 erzeugt die Regelungseinrichtung 6 abhängig von den Messwerten der Sensoren 5 Stellsignale für die Aktuatoren 3 und 4 zur Einstellung von Spur und/oder Sturz. Hierbei werden derartige Stellsignale erzeugt, dass mit den Sensoren 5 als Messwert erfasste Istwerte von Spur und/oder Sturz vorgegebenen Sollwerten nachgeführt werden.

Mit der hier vorliegenden Erfindung wird demnach vorgeschlagen, in einem Kraftfahrzeug durch antriebsstranginterne Sensoren Istwerte für Spur und/oder Sturz zu erfassen und abhängig hiervon in einer Regelungseinrichtung des Kraftfahrzeugs Stellsignale für antriebsstranginterne Aktuatoren zur Einstellung von Spur und/oder Sturz zu erzeugen, nämlich dann, wenn der Antriebsstrang einen definierten, statischen Ist-Zustand aufweist. Diese Einstellung von Spur und/oder Sturz kann entweder automatisch nach z. B. jedem Neustart des Kraftfahrzeugs oder nach Aktivierung in einer Werkstatt erfolgen.

### Bezugszeichen

- 1: Antriebsstrang
- 2: Rad
- 3: Aktuator
- 4: Aktuator
- 5: Sensor
- 6: Regelungseinrichtung
- 7: Schritt
- 8: Schritt
- 9: Schritt
- 10: Schritt
- 11: Schritt

## Patentansprüche

1. Verfahren zum Einstellen antriebsstrangseitiger Räder (2) eines Kraftfahrzeugs, wobei der Antriebsstrang neben den Rädern (2) ein Antriebsaggregat und ein Getriebe umfasst, und wobei Spur und/oder Sturz der Räder (2) durch kraftfahrzeuginterne Aktuatoren (3, 4) eingestellt werden und Messwerte von Spur und/oder Sturz durch kraftfahrzeuginterne Sensoren (5) ermittelt werden, **dadurch gekennzeichnet,**
- **dass** nach einem Kraftfahrzeugneustart, bei welchem sich das Kraftfahrzeug im Stillstand befindet und vorzugsweise gleichzeitig der Lenkwinkel in etwa Null beträgt, an den Rädern (2) mit Hilfe der Sensoren (5) Messwerte und damit Ist-Werte von Spur und/oder Sturz ermittelt werden, und
- **dass** dann, wenn hierbei eine Abweichung von einem Soll-Wert für Spur und/oder Sturz ermittelt wird, ein Fehlereintrag gespeichert wird, wobei bei einem Werkstattbesuch die Ansteuerung der Aktuatoren (3, 4) freigegeben wird, wobei
- die Einstellung von Spur und/oder Sturz über die Aktuatoren (3, 4) nur dann durchgeführt wird, wenn sich das Kraftfahrzeug im Stillstand befindet und vorzugsweise gleichzeitig ein Lenkwinkel in etwa Null beträgt.

2. Verfahren nach Anspruch 1, **dadurch gekennzeichnet, dass** die Sensoren (5) nur dann Messwerte bereitstellen, wenn sich das Kraftfahrzeug im Stillstand befindet und vorzugsweise gleichzeitig ein Lenkwinkel in etwa Null beträgt.

3. Verfahren nach Anspruch 1, **dadurch gekennzeichnet, dass** die Aktuatoren (3, 4) auf längsverstellbare Lenker einer Vorderachse und/oder einer Hinterachse einwirken, um Spur und/oder Sturz abhängig von den Messwerten von Spur und/oder Sturz aktiv einzustellen.

4. Verfahren nach Anspruch 1 oder 3, **dadurch gekennzeichnet, dass** die Sensoren (5) die Lage eine Radebene der Räder (2) an der Vorderachse und/oder an der Hinterachse erfassen.

5. Verfahren nach Anspruch 4, **dadurch gekennzeichnet, dass** die Sensoren (5) als Abstandssensoren ausgebildet sind, welche die dreidimensionale, absolute Lage der Radebene zur jeweiligen Kraftfahrzeugachse erfassen.

## Claims

1. Method for adjusting drive-train-side wheels (2) of a motor vehicle, wherein the drive train comprises a drive unit and a transmission in addition to the wheels (2), and wherein the toe-in and/or camber of the wheels (2) are set by means of motor-vehicle-internal actuators (3, 4), and the measured values of the toe-in and/or camber are determined by means of motor-vehicle-internal sensors (5), **characterized**
- **in that**, after restarting of the motor vehicle during which the motor vehicle is in a stationary state and preferably at the same time the steering angle is approximately zero, measured values and therefore actual values of the toe-in and/or camber are determined at the wheels (2) using the sensors (5), and
- **in that** if in the process a deviation from a setpoint value for the toe-in and/or camber is determined, a fault entry is stored, wherein the actuation of the actuators (3, 4) is enabled at a visit to a workshop, wherein
- the setting of the toe-in and/or camber is carried out by means of the actuators (3, 4) only if the motor vehicle is in the stationary state and at the same time a steering angle is preferably approximately zero.

2. Method according to Claim 1, **characterized in that** the sensors (5) make available measured values only if the motor vehicle is in the stationary state and at the same time a steering angle is preferably approximately zero.

3. Method according to Claim 1, **characterized in that** the actuators (3, 4) act on longitudinally adjustable radius arms of a front axle and/or of a rear axle in order to actively set the toe-in and/or camber as a function of the measured values of the toe-in and/or camber.

4. Method according to Claim 1 or 3, **characterized in that** the sensors (5) sense the position of a wheel plane of the wheels (2) at the front axle and/or at the rear axle.

5. Method according to Claim 4, **characterized in that** the sensors (5) are embodied as distance sensors which sense the three-dimensional absolute position of the wheel plane in relation to the respective motor vehicle axle.

## Revendications

1. Procédé d'ajustement des roues (2) du côté de la chaîne de transmission d'un véhicule automobile, dans lequel la chaîne de transmission comprend, en plus des roues (2), une unité d'entraînement et une boîte de vitesses, le pincement et/ou le carrossage des roues (2) étant ajustés par des actionneurs (3, 4) internes au véhicule automobile, et des valeurs de mesure du pincement et/ou du carrossage étant déterminées par des capteurs (5) internes au véhicule automobile, **caractérisé en ce**
- **qu**'après un nouveau démarrage du véhicule automobile, au cours duquel le véhicule automobile se trouve à l'arrêt et l'angle de braquage est simultanément de préférence approximativement nul, des valeurs de mesure et donc des valeurs instantanées du pincement et/ou du carrossage sont déterminées au niveau des roues (2) à l'aide des capteurs (5), et
- qu'ensuite, si en l'occurrence un écart par rapport à une valeur de consigne pour le pincement et/ou le carrossage est détecté, une entrée d'erreur est enregistrée, la commande des actionneurs (3, 4) étant libérée dans un atelier de réparations,
- l'ajustement du pincement et/ou du carrossage par le biais des actionneurs (3, 4) n'étant effectué que lorsque le véhicule automobile se trouve à l'arrêt et qu'un angle de braquage est simultanément de préférence approximativement nul.

2. Procédé selon la revendication 1, **caractérisé en ce que** les capteurs (5) ne fournissent des valeurs de mesure que lorsque le véhicule automobile se trouve à l'arrêt et qu'un angle de braquage est simultanément de préférence approximativement nul.

3. Procédé selon la revendication 1, **caractérisé en ce que** les actionneurs (3, 4) agissent sur des bras oscillants réglables en longueur d'un essieu avant et/ou d'un essieu arrière, afin d'ajuster activement le pincement et/ou le carrossage en fonction des valeurs de mesure du pincement et/ou du carrossage.

4. Procédé selon la revendication 1 ou 3, **caractérisé en ce que** les capteurs (5) détectent la position d'un plan de roue des roues (2) au niveau de l'essieu avant et/ou de l'essieu arrière.

5. Procédé selon la revendication 4, **caractérisé en ce que** les capteurs (5) sont réalisés sous forme de capteurs de distance, qui détectent la position tridimensionnelle absolue du plan de roue par rapport à chaque essieu du véhicule automobile.
